# EUROPÄISCHE PATENTANMELDUNG

(11) **EP 3 120 918 A1**
(43) Veröffentlichungstag der Anmeldung: **25.01.2017**
(21) Anmeldenummer: 16179544.8
(22) Anmeldetag: 14.07.2016
(51) Int. Cl.: B01D 46/00, B01D 46/10

(54) **FILTEREINRICHTUNG FÜR EIN KRAFTFAHRZEUG**

(30) Priorität: 24.07.2015 DE 102015213992
(71) Anmelder: Mahle International GmbH, 70376 Stuttgart (DE)
(72) Erfinder: DRESSLER, Bernd, 70439 Stuttgart (DE); HEGNER, Hilmar, 70806 Kornwestheim (DE); KLEIN, Florian, 75378 Möttlingen (DE)
(74) Vertreter: BRP Renaud & Partner mbB Rechtsanwälte Patentanwälte Steuerberater

(57) **Zusammenfassung**

Die Erfindung betrifft eine Filtereinrichtung für ein Kraftfahrzeug, insbesondere zur Filterung von Luft, mit einem Filterelementträger (18), in welchen ein Filterelement (20) eingesetzt werden kann, mit einem Gehäuse (12), in welches der Filterelementträger (18) seitlich eingeschoben werden kann, wobei das Gehäuse (12) ein erstes Führungsmittel (56) zur Führung des Filterelementträgers (18) aufweist und wobei der Filterelementträger (18) ein zum ersten Führungsmittel (56) komplementäres und mit diesem zusammenwirkendes zweites Führungsmittel (84) aufweist.

Um das Einschieben des Filterelementträgers zu erleichtern wird vorgeschlagen, dass das erste Führungsmittel (56) und das zweite Führungsmittel (84) jeweils einen geradlinigen Führungsabschnitt (62, 93) aufweisen, dass das erste Führungsmittel (56) und/oder das zweite Führungsmittel (84) mindestens einen Keilabschnitt (64, 66, 68, 87, 88, 92) aufweist, dass, wenn der Filterelementträger (18) sich in einem ersten Abschnitt (106) des Einschubweges (70) befindet, der Führungsabschnitt (62) des ersten Führungsmittels (56) und der Führungsabschnitt (93) des zweiten Führungsmittels (84) in Eingriff zueinander stehen, und dass der Keilabschnitt (64, 66, 68, 87, 88, 92) erst an der Führung des Filterelementträgers (18) beteiligt ist, wenn der Filterelementträger (18) sich in einem zweiten Abschnitt (110) des Einschubweges (70) befindet.

## Beschreibung

Die Erfindung betrifft eine Filtereinrichtung für ein Kraftfahrzeug, insbesondere zur Filterung von Luft, mit einem Filterelement, das eine an dem Filterelement ausgebildete Dichtung aufweist, mit einem Filterelementträger, in welchen das Filterelement eingesetzt werden kann und der eine Dichtungsstützfläche aufweist, auf welcher die Dichtung des Filterelements aufliegt, wenn das Filterelement in den Filterelementträger eingesetzt ist, mit einem Gehäuse, in welches der Filterelementträger seitlich eingeschoben werden kann und welches eine Dichtfläche aufweist, an welcher die Dichtung anliegt, wenn der Filterelementträger mit darin eingesetztem Filterelement in das Gehäuse eingeschoben ist, wobei das Gehäuse ein erstes Führungsmittel zur Führung des Filterelements aufweist und wobei der Filterelementträger ein zum ersten Führungsmittel komplementäres und mit diesem zusammenwirkendes zweites Führungsmittel aufweist, insbesondere gemäß dem Oberbegriff des Anspruchs 1.

Solche Filtereinrichtungen werden auch Schubladenfilter genannt, da bei solchen Filtereinrichtungen eine Schublade mit eingesetztem Filterelement in das Gehäuse der Filtereinrichtung eingeschoben wird. Eine solche Schubladenfiltereinrichtung ermöglicht den einfachen Austausch der Filterelemente. Um eine ausreichende Abdichtung des Filterelements gegen das Gehäuse zu erzielen, muss das Filterelement, insbesondere die Dichtung des Filterelements, gegen die Dichtfläche des Gehäuses gepresst werden. Dadurch erhöhen sich die Reibungskräfte beim Einschieben des Filterelementträgers in das Gehäuse.

Aus der EP 0 391 019 A1 ist ein Schubladenfilter bekannt, bei welchem eine Führung schräg verläuft, so dass beim Einschieben des Filterelementträgers das Filterelement auch axial in Richtung der Dichtfläche verschoben wird. Eine solche Ausgestaltung hat das Problem, dass ein relativ geringer Winkel zwischen der Einschubrichtung und der Dichtfläche gegeben ist, so dass im Endbereich des Einschubweges sehr hohe Reibungskräfte auftreten. Wenn die Steigung der Führung vergrößert würde, wäre zwar das Reibungsproblem geringer, allerdings würde ein Einschubschacht für den Filterelementträger erheblich mehr Platz benötigen.

Der vorliegenden Erfindung liegt die Aufgabe zugrunde, eine verbesserte oder zumindest andere Ausführungsform einer Filtereinrichtung bereitzustellen, die sich insbesondere durch ein belastungsarmes Einschieben des Filterelementträgers und einen geringen Bauraumbedarf auszeichnet.

Diese Aufgabe wird erfindungsgemäß durch den Gegenstand des unabhängigen Anspruchs gelöst. Vorteilhafte Weiterbildungen sind Gegenstand der abhängigen Ansprüche.

Die Erfindung beruht auf dem allgemeinen Gedanken, die Schräge in der Führung nicht über die gesamte Einschublänge auszubilden, so dass der Filterelementträger seitlich gerade in das Gehäuse eingeschoben werden kann, ohne dass die Dichtung an der Dichtfläche reibt. Erst am Ende des Einschubweges tritt eine Schräge in Kraft, welche den Filterelementträger und damit die Dichtung des Filterelements gegen die Dichtfläche des Gehäuses drückt. Dafür ist es zweckmäßig, dass das erste Führungsmittel und das zweite Führungsmittel jeweils einen gradlinigen Führungsabschnitt aufweisen und dass das erste Führungsmittel und/oder das zweite Führungsmittel mindestens einen Keilabschnitt aufweisen. Der geradlinige Führungsabschnitt bewirkt die seitliche Einführung des Filterelementträgers in das Gehäuse, ohne dass die Dichtung an der Dichtfläche reibt. Der mindestens eine Keilabschnitt bewirkt eine Verlagerung des Filterelementträgers in Richtung der Dichtfläche des Gehäuses, so dass die Dichtung gegen die Dichtfläche gepresst werden kann. Ferner ist es zweckmäßig, dass ein Einschubweg des Filterelementträgers in das Gehäuse mindestens einen ersten Abschnitt und einen zweiten Abschnitt aufweist, dass, wenn der Filterelementträger sich im ersten Abschnitt des Einschubweges befindet, der Führungsabschnitt des ersten Führungsmittels und der Führungsabschnitt des zweiten Führungsmittels in Eingriff zueinander stehen und dass der Keilabschnitt erst an der Führung des Filterelementträgers beteiligt ist, wenn der Filterelementträger sich im zweiten Abschnitt des Einschubweges befindet. Folglich kann dadurch im ersten Abschnitt des Einschubweges eine geradlinige Einführung des Filterelementträgers in das Gehäuse erzielt werden, bei welchem die Dichtung des Filterelements nicht an der Dichtfläche des Gehäuses anliegt. Im zweiten Abschnitt des Einschubweges, in welchem der Keilabschnitt an der Führung des Filterelements beteiligt ist, kann dann der Filterelementträger und damit das Filterelement mit seiner Dichtung derart verlagert werden, dass die Dichtung in Richtung der Dichtfläche des Gehäuses verschoben wird und somit eine Abdichtung des Filterelements zu dem Gehäuse erzielt werden kann.

In der Beschreibung und den beigefügten Ansprüchen wird unter seitlichem Einschieben verstanden, dass die Einschubrichtung insbesondere schräg zu einer Strömungsrichtung des zu filternden Fluids, insbesondere der Luft, verläuft.

Eine günstige Möglichkeit sieht vor, dass der Keilabschnitt bei einem Einschieben des Filterelementträgers in das Gehäuse eine Kompression der Dichtung des Filterelements gegen die Dichtfläche des Gehäuses bewirkt. Es versteht sich, dass dies nur dann der Fall ist, wenn sich der Filterelementträger im zweiten Abschnitt des Einschubweges befindet und der Keilabschnitt an der Führung des Filterelementträgers beteiligt ist. Dadurch kann die Abdichtung des Filterelements zu dem Gehäuse bewerkstelligt werden, ohne eine zu hohe mechanische Belastung der Dichtung beim Einschieben des Filterelementträgers in das Gehäuse zu verursachen.

Eine weitere günstige Möglichkeit sieht vor, dass durch den Keilabschnitt der Filterelementträger in Richtung der Dichtfläche gelenkt wird. Dies bewirkt eine Verringerung des Abstandes der Dichtungsstützfläche des Filterelementträgers zu der Dichtfläche des Gehäuses, so dass die Dichtung zwischen der Dichtungsstützfläche und der Dichtfläche komprimiert wird und dadurch die Abdichtung zwischen dem Filterelement und dem Gehäuse erzielt wird.

Eine besonders günstige Möglichkeit sieht vor, dass sich ein Abstand zwischen der Dichtung des Filterelements und der Dichtfläche des Gehäuses beim Einschieben des Filterelementträgers in das Gehäuse verkleinert, wenn der Filterelementträger sich in dem zweiten Abschnitt des Einschubweges befindet. Durch die Verringerung des Abstandes zwischen der Dichtungsstützfläche des Filterelementträgers und der Dichtfläche des Gehäuses wird die Dichtung gegen die Dichtfläche des Gehäuses gepresst, so dass dadurch eine Abdichtung des Filterelements gegen das Gehäuse erzielt werden kann.

Eine vorteilhafte Lösung sieht vor, dass die Führungsabschnitte des ersten Führungsmittels und des zweiten Führungsmittels aneinanderliegen, wenn der Filterelementträger sich in dem ersten Abschnitt des Einschubweges befindet, und dass die Führungsabschnitte des ersten Führungsmittels und des zweiten Führungsmittels zueinander beabstandet sind, wenn der Filterelementträger sich in dem zweiten Abschnitt des Einschubweges befindet. Dadurch können die Führungsabschnitte der jeweiligen Führungsmittel die Führung des Filterelementträgers in dem Gehäuse bewirken, wenn der Filterelementträger im ersten Abschnitt des Einschubweges liegt. Im zweiten Abschnitt des Einschubweges wird dann der Filterelementträger angehoben, so dass sich die beiden Führungsabschnitte des ersten Führungsmittels und des zweiten Führungsmittels auseinander bewegen. Dadurch entsteht eine Verlagerung des Filterelementträgers in Richtung der Dichtfläche des Gehäuses, so dass dadurch die Dichtung des Filterelements gegen die Dichtfläche gepresst werden kann und somit eine Abdichtung des Filterelements gegen das Gehäuse erzielt werden kann.

Eine weitere vorteilhafte Lösung sieht vor, dass der mindestens eine Keilabschnitt des ersten Führungsmittels geneigt zu der Dichtfläche des Gehäuses verläuft. Durch die geneigte Orientierung des Keilabschnitts des ersten Führungsmittels zu der Dichtfläche wird der Filterelementträger, der durch das erste Führungsmittel geführt wird, auf dem Keilabschnitt auch axial verlagert, d.h. in Richtung der Dichtfläche des Gehäuses verlagert.

Eine weitere besonders vorteilhafte Lösung sieht vor, dass der mindestens eine Keilabschnitt des zweiten Führungsmittels geneigt zu der Dichtungsstützfläche des Filterelementträgers verläuft. Dadurch kann der Keilabschnitt, wenn der Keilabschnitt des zweiten Führungsmittels in Eingriff kommt, den Filterelementträger anheben, so dass die Dichtungsstützfläche in Richtung der Dichtfläche des Gehäuses geleitet wird.

Eine günstige Variante sieht vor, dass das erste Führungsmittel mindestens einen Keilabschnitt aufweist und dass das zweite Führungsmittel mindestens einen Keilabschnitt aufweist. Dadurch, dass mindestens zwei Keilabschnitte vorgesehen sind, kann die axiale Verlagerung des Filterelementträgers beim Einschieben in das Gehäuse noch besser gesteuert werden.

Eine weitere günstige Variante sieht vor, dass das erste Führungsmittel zwei Keilabschnitte aufweist und/oder dass das zweite Führungsmittel zwei Keilabschnitte aufweist, wobei der jeweilige Führungsabschnitt zwischen den jeweiligen Keilabschnitten liegt. Auf diese Weise können die Keilabschnitte den Filterelementträger beim Einschieben in das Gehäuse gleichmäßiger mit einer Kraft in Richtung der Dichtfläche beaufschlagen, so dass die Flächenpressung der Dichtung an der Dichtfläche gleichmäßiger ist.

Eine weitere besonders günstige Variante sieht vor, dass der mindestens eine Keilabschnitt an dem Filterelementträger und der mindestens eine Keilabschnitt an dem Gehäuse komplementär zueinander ausgebildet sind, insbesondere eine gleiche Neigung gegen die Dichtfläche bzw. Dichtungsstützfläche aufweisen. Dadurch können die zueinander komplementär ausgebildeten Keilabschnitte ineinandergreifen, so dass eine große Auflagefläche vorliegt und dadurch eine geringere Flächenpressung zwischen den Keilabschnitten vorliegt. Auf diese Weise wird die Belastung der Führungsmittel reduziert.

Eine vorteilhafte Möglichkeit sieht vor, dass, wenn der Filterelementträger vollständig in das Gehäuse eingeschoben ist, die Dichtfläche und die Dichtungsstützfläche im Wesentlichen parallel zueinander verlaufen. Dadurch ist eine gleichmäßige Verpressung der Dichtung zwischen der Dichtfläche und der Dichtungsstützfläche gegeben. Somit ist die Abdichtung zwischen dem Filterelement und dem Gehäuse verbessert.

In der Beschreibung und den beigefügten Ansprüchen heißt im Wesentlichen bezogen auf eine Richtungsangabe, wie beispielsweise parallel oder senkrecht, dass eine Abweichung zu dieser Richtungsangabe kleiner als 10°, vorzugsweise kleiner als 5°, besonders bevorzugt kleiner als 2° ist.

Eine weitere vorteilhafte Möglichkeit sieht vor, dass die Führungsabschnitte weniger stark geneigt zu der Dichtfläche bzw. der Dichtungsstützfläche verlaufen als der mindestens eine Keilabschnitt. Dadurch kann ein Großteil des Einschubweges mit nur einer sehr geringen oder keinen Verlagerung des Filterelementträgers in Richtung der Dichtfläche erzielt werden. Dies ermöglicht wiederum, dass beim Einschieben des Filterelementträgers die Dichtung nicht an der Dichtfläche reibt und trotzdem die benötigte Höhe des Einschubschachtes für den Filterelementträger im Gehäuse klein ist.

Eine besonders vorteilhafte Möglichkeit sieht vor, dass die Einschubabschnitte im Wesentlichen parallel zu der Dichtfläche bzw. der Dichtungsstützfläche verlaufen. Somit wäre eine Verlagerung des Filterelementträgers in Richtung der Dichtfläche beim Einschieben im ersten Abschnitt des Einschubweges sehr gering, so dass dadurch die Abmessungen des Schachtes und damit die Abmessungen des Gehäuses reduziert werden können.

Eine günstige Lösung sieht vor, dass das erste Führungsmittel und das zweite Führungsmittel derart ausgebildet sind, dass der zweite Abschnitt des Einschubweges erst nach 70%, vorzugsweise nach 80% und besonders bevorzugt nach 90% eines gesamten Einschubweges des Filterelementträgers beginnt. Dadurch kann ein Großteil des Einschubweges mit sehr geringen Kräften erzielt werden, da erst auf dem letzten Teil des Einschubweges überhaupt eine Verlagerung des Filterelementträgers in Richtung der Dichtfläche erfolgt, so dass auch über den Großteil des Einschubweges keine zusätzliche Reibung in der Dichtung an der Dichtfläche verursacht wird.

In der Beschreibung und den beigefügten Ansprüchen heißt "beginnt erst nach einem bestimmten Prozentsatz eines Weges", "beginnt nicht vor diesem Prozentsatz des Weges".

In der Beschreibung und den beigefügten Ansprüchen beginnt der Einschubweg an der Stelle, an der der Filterelementträger in das Gehäuse eintritt, und endet an der Stelle, an der der Filterelementträger nicht mehr weiter in das Gehäuse eingeschoben werden kann.

Eine besonders günstige Lösung sieht vor, dass die Führungsmittel durch ein L-Profil, eine Nut, eine Schiene, einen Absatz oder eine Feder gebildet sein können. Diese Varianten, die Führungsmittel zu bilden, sind einfach herzustellen und robust.

Eine weitere besonders günstige Lösung sieht vor, dass das Filterelement eine erste Strömungsfläche und eine zweite Strömungsfläche, die in einer axialen Richtung zueinander versetzt angeordnet sind und jeweils eine im Wesentlichen rechteckige Grundfläche aufweisen, und mehrere Seitenflächen aufweist, welche die erste Strömungsfläche und die zweite Strömungsfläche verbinden, wobei die Dichtung an den Seitenflächen umläuft. Auf diese Weise kann die Dichtung eine Rohluftseite von einer Reinluftseite der Filtereinrichtung abdichten, welche von dem Filterelement getrennt sind.

Eine vorteilhafte Variante sieht vor, dass die Dichtung durch ein Dichtmaterial gebildet ist, das die Seitenflächen abdeckt und zwischen der ersten Strömungsfläche und der zweiten Strömungsfläche zu einer Dichtschlaufe geformt ist. So kann sehr einfach eine an den Seitenflächen umlaufende und nach außen abstehende Dichtung gebildet werden. Zusätzlich ist durch die Schlaufenform die Dichtung sehr flexibel, so dass eine optimale Abdichtung durch die Dichtung möglich ist.

Eine weitere vorteilhafte Variante sieht vor, dass die Dichtschlaufe zwischen der Dichtungsstützfläche des Filterelementträgers und der Dichtfläche des Gehäuses eingeklemmt ist, wenn der Filterelementträger in das Gehäuse eingeschoben ist. Dadurch bildet die Dichtung an der Dichtfläche einen dichten Übergang, so dass eine Rohluftseite zu einer Reinluftseite in der Filtereinrichtung durch die Dichtung abgedichtet ist.

Eine besonders vorteilhafte Variante sieht vor, dass die Dichtschlaufe außermittig an den Seitenflächen umläuft. Dadurch kann erzielt werden, dass das Filterelement nicht falsch herum in den Filterelementträger eingesetzt werden kann. Beispielsweise steht das Filterelement zu weit über den Filterelementträger über, wenn das Filterelement falsch herum eingesetzt ist, so dass der Filterelementträger nicht mehr in das Gehäuse eingeschoben werden kann. Dadurch kann ein Filtermaterial verwendet werden, das bevorzugt in einer bestimmten Richtung durchströmt sein sollte.

Eine weitere besonders vorteilhafte Variante sieht vor, dass die Dichtschlaufe näher zu einer der Strömungsflächen angeordnet ist, vorzugsweise zu der ersten. Auf diese Weise wird eine außermittige Anordnung der Dichtschlaufe erzielt, so dass dadurch auch ein Schutz vor einer falschen Montage des Filterelements erzielt ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine perspektivische Ansicht einer Filtereinrichtung,
- Fig. 2: eine perspektivische Ansicht eines Filterelementträgers mit darin eingesetztem Filterelement,

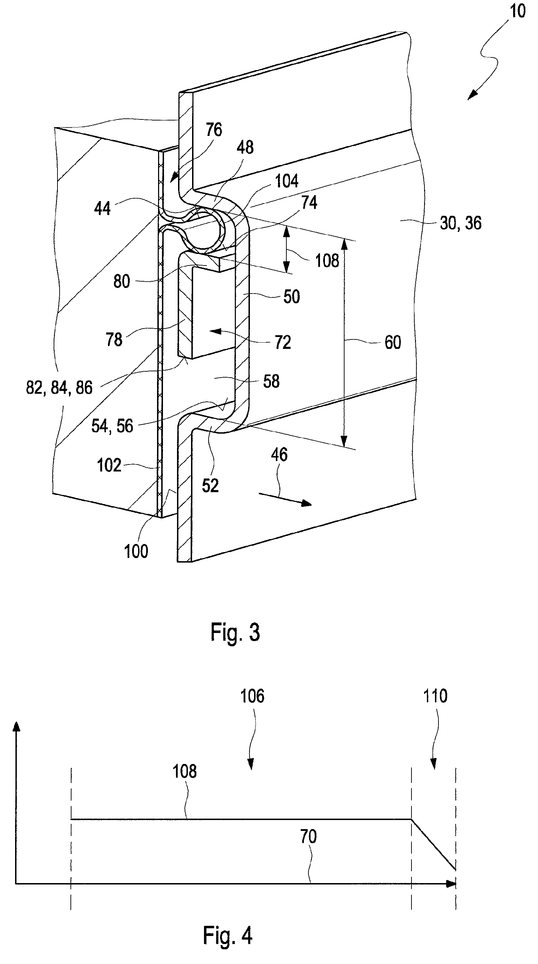

- Fig. 3: eine perspektivische Schnittdarstellung entlang der Schnittebene A aus Fig. 1, und
- Fig. 4: ein Diagramm, bei welchem ein Abstand zwischen einer Dichtungsstützfläche und einer Dichtfläche über einem Einschubweg des Filterelementträgers in das Gehäuse dargestellt ist.

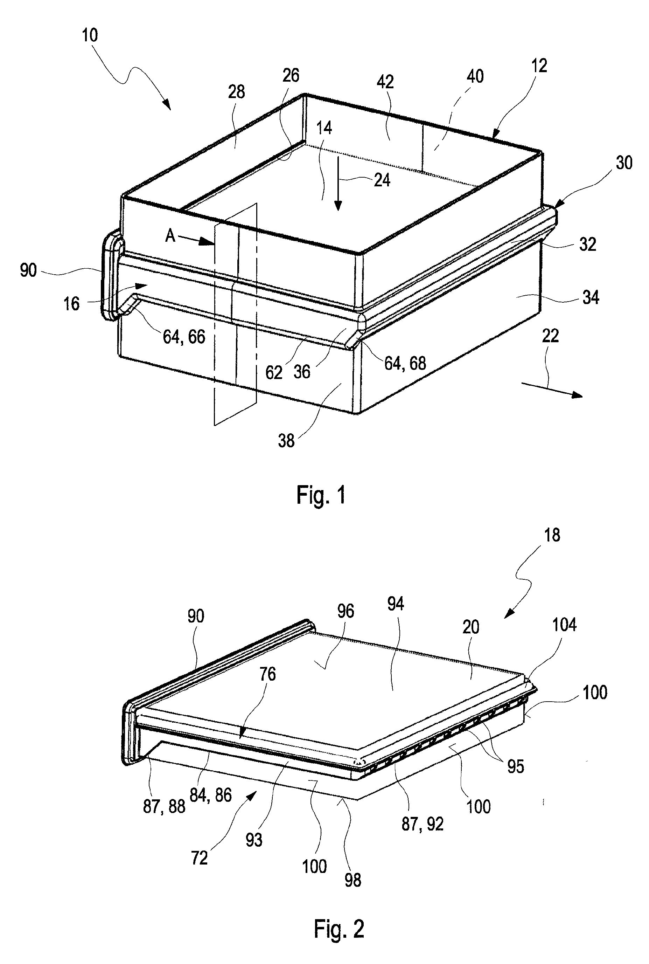

Eine in Fig. 1 dargestellte Filtereinrichtung 10 wird zur Filterung eines Fluids, insbesondere von Luft, verwendet. Vorzugsweise wird die Filtereinrichtung 10 zur Filterung von Luft eines Klimageräts verwendet. Die Filtereinrichtung 10 weist ein Gehäuse 12 auf, das einen vorzugsweise rechteckigen Strömungskanal 14 bildet. In dem Gehäuse 12 ist ein Schacht 16 ausgebildet, durch welchen seitlich ein Filterelementträger 18 mit darin eingesetztem Filterelement 20 in das Gehäuse 12 eingeschoben werden kann, um das Filterelement 20 in eine ordnungsgemäße abgedichtete Betriebsposition zu bringen. Eine Einschubrichtung 22 des Filterelementträgers ist seitlich, d.h. insbesondere schräg zu einer Strömungsrichtung 24 des zu filternden Fluids.

Der Schacht 16 weist eine Einschuböffnung 26 an einer ersten Seitenwand 28 des Gehäuses 12 auf. Durch die Einschuböffnung 26 kann der Filterelementträger 18 in das Gehäuse 12 eingeschoben werden. Dadurch kann das Filterelement 20, das in dem Filterelementträger 18 eingesetzt ist, einen Strömungsquerschnitt des Strömungskanals 14 abdecken und somit Fluid, das durch den Strömungskanal 14 strömt, filtern.

Ferner weist das Gehäuse 12 eine Sicke 30 auf, die an den anderen drei Seitenwänden gebildet ist. Eine hintere Sicke 32 ist an einer der ersten Seitenwand 28 gegenüberliegenden zweiten Seitenwand 34 gebildet. Eine erste seitliche Sicke 36 ist an einer dritten Seitenwand 38 gebildet und eine zweite seitliche Sicke 40 ist an einer vierten Seitenwand 42 gebildet. Die beiden seitlichen Sicken 36 und 40 verlaufen jeweils von der Einschuböffnung 26 bis zu der hinteren Sicke 32.

Die beiden seitlichen Sicken 36, 40 und die hintere Sicke 32 bilden somit die gemeinsame ineinander übergehende Sicke 30. An der Sicke 30 ist eine Dichtfläche 44 gebildet, welche im Wesentlichen senkrecht zur Strömungsrichtung 24 des Fluids verläuft. Insbesondere ist die Dichtfläche 44 umlaufend ausgebildet. Das heißt, sie läuft entlang der ersten Seitenwand 28, der zweiten Seitenwand 34, der dritten Seitenwand 38 und der vierten Seitenwand 42. Folglich wird die Dichtfläche 44 an der zweiten Seitenwand 34, der dritten Seitenwand 38 und an der vierten Seitenwand 42 durch die Sicke 30 gebildet und an der ersten Seitenwand 28 im Bereich der Einschuböffnung 26 gebildet.

Die Dichtfläche 44 ist an der Sicke 30 an einem ersten sich in radialer Richtung 46 erstreckenden ersten Sickenabschnitt 48 gebildet. Die Dichtfläche 44 ist vorzugsweise an einer Innenseite des ersten Sickenabschnitts 48 gebildet. Ein zweiter Sickenabschnitt 50, welcher sich im Wesentlichen in Strömungsrichtung 24 des Fluids erstreckt, verbindet den ersten Sickenabschnitt 48 mit einem dritten Sickenabschnitt 52. An dem dritten Sickenabschnitt 52 ist an einer Innenseite des Sickenabschnitts 52 eine Auflagefläche 54 gebildet, welche ein erstes Führungsmittel 56 zur Führung des Filterelementträgers 18 in das Gehäuse 12 bildet.

Die erste seitliche Sicke 36 und die zweite seitliche Sicke 40 sind ähnlich zueinander, vorzugsweise im Wesentlichen symmetrisch zueinander, ausgebildet, so dass der Filterelementträger 18 an beiden Seiten gleichartig geführt wird. An den beiden seitlichen Sicken 36 und 40 verläuft der dritte Sickenabschnitt 52 im Wesentlichen radial von dem zweiten Sickenabschnitt 50 ausgehend nach innen und geht an der Innenseite in die normal verlaufende dritte Seitenwand 38 bzw. vierte Seitenwand 42 über.

Ein Profil des durch die seitlichen Sicken 36 und 40 gebildeten Freiraums ist grundsätzlich rechteckig, wobei die Ecken abgerundet sein können, um die Fertigung zu erleichtern. Bei den beiden seitlichen Sicken 36 und 40 ist das Profil 58 der jeweiligen seitlichen Sicke 36, 40 über die Länge der seitlichen Sicke 36, 40 veränderlich, insbesondere ist eine Höhe 60 der seitlichen Sicke 36, 40 veränderlich. Die Höhe 60 der seitlichen Sicke 36,40 ist durch den Abstand des ersten Sickenabschnitts 48 zu dem dritten Sickenabschnitt 52 gegeben.

Da die Dichtfläche 44, welche an dem zweiten Sickenabschnitt 50 gebildet ist, im Wesentlichen in einer Ebene verläuft, verläuft der dritte Sickenabschnitt 52 und damit die Auflagefläche 54 und damit das erste Führungsmittel 56 nicht eben.

Vorzugsweise weist das erste Führungsmittel 56 einen gradlinigen Führungsabschnitt 62 auf und mindestens einen, beispielsweise zwei Keilabschnitte 64 auf. Vorzugsweise weist das erste Führungsmittel 56 einen vorderen Keilabschnitt 66 auf, welcher angrenzend zu der Einschuböffnung 26 angeordnet ist, und einen hinteren Keilabschnitt 68 auf, der angrenzend zu der zweiten Seitenwand 34 angeordnet ist. Der Führungsabschnitt 62 ist also vorzugsweise zwischen dem vorderen Keilabschnitt 66 und dem hinteren Keilabschnitt 68 angeordnet.

Da die beiden seitlichen Sicken 36 und 40 ähnlich zueinander ausgebildet sind, ist das erste Führungsmittel 56 von beiden seitlichen Sicken 36 und 40 zusammen gebildet. Das erste Führungsmittel 56 weist beispielsweise einen Führungsabschnitt 62 auf, der gleichzeitig an der ersten seitlichen Sicke 36 und der zweiten seitlichen Sicke 40 gebildet ist. Entsprechendes gilt für die Keilabschnitte 64. Wenn also in der Beschreibung oder den beigefügten Ansprüchen von mindestens einem Keilabschnitt 64 gesprochen wird, ist damit gemeint, dass das erste Führungsmittel 56 mindestens einen Keilabschnitt 64 aufweist, der sowohl an der ersten seitlichen Sicke 36 als auch an der zweiten seitlichen Sicke 40 gebildet ist. Entsprechendes gilt auch für den Führungsabschnitt 62.

Es versteht sich, dass die genauen Abmessungen und Positionen des Führungsabschnitts 62 und der Keilabschnitte 64, sich an der ersten seitlichen Sicke 36 und der zweiten seitlichen Sicke 40 unterscheiden können.

Im Bereich der Keilabschnitte 64 ist der dritte Sickenabschnitt 52 zu dem ersten Sickenabschnitt 48 geneigt angeordnet. Dadurch variiert zum Einen in den Keilabschnitten 64 die Höhe 60 der Sicke 30. Somit variiert auch ein Abstand der Auflagefläche 54 zu der Dichtfläche 44. Der gradlinige Führungsabschnitt 62 ist weniger stark gegenüber der Dichtfläche 44 geneigt als die Keilabschnitte 64. Vorzugsweise verläuft der Führungsabschnitt 62 annähernd parallel zu der Dichtfläche 44.

Durch die Unterteilung in Keilabschnitte 64 und Führungsabschnitt 62 kann der Filterelementträger 18 entlang des Führungsabschnitts 62 seitlich in das Gehäuse 12 eingeschoben werden. Erst ab einem bestimmten Punkt auf einem Einschubweg 70 des Filterelementträgers 18 in das Gehäuse 12 tragen die Keilabschnitte 64 zur Führung des Filterelementträgers bei und verlagern beim Einschieben des Filterelementträgers 18 diesen in Richtung der Dichtfläche 44.

Bei der hinteren Sicke 32 verläuft der dritte Sickenabschnitt 52 von dem zweiten Sickenabschnitt 50 ausgehend schräg nach innen zur zweiten Seitenwand 34. Vorzugsweise ist die Schräge des dritten Sickenabschnitts 52 der hinteren Sicke 32 gleich wie die Schräge des hinteren Keilabschnitts 68, der an den seitlichen Sicken 36 und 40 gebildet ist. Somit bildet der dritte Sickenabschnitt 52 der hinteren Sicke 32 einen Teil des hinteren Keilabschnitts 68.

Der Filterelementträger 18 weist einen Rahmen 72 auf, in welchen das Filterelement 20 eingesetzt werden kann. Der Rahmen 72 weist eine axial gerichtete Dichtungsstützfläche 74 auf, an welcher eine Dichtung 76 des Filterelements 20 anliegt, wenn das Filterelement in den Filterelementträger 18 eingesetzt ist. Die Dichtungsstützfläche 74 ist um den Rahmen 72 umlaufend ausgebildet. Wenn der Filterelementträger 18 in das Gehäuse 12 eingesetzt ist, verläuft die Dichtungsstützfläche 74 im Wesentlichen parallel zu der Dichtfläche 44. Dadurch kann die Dichtungsstützfläche 74 die Dichtung 76 des Filterelements 20 gleichmäßig mit einer Kraft gegen die Dichtfläche 44 beaufschlagen. Folglich kann eine gute Dichtwirkung zwischen der Dichtung 76 des Filterelements 20 und der Dichtfläche 44 des Gehäuses 12 erzielt werden.

Der Rahmen 72 ist vorzugsweise L-förmig im Profil. Ein längerer Arm 78 des Ls erstreckt sich im eingebauten Zustand im Wesentlichen in der Strömungsrichtung 24 und ein kürzerer Arm des Ls 80 erstreckt sich im Wesentlichen radial von dem längeren Arm 78 aus nach außen. An dem kürzeren Arm 80 ist die Dichtungsstützfläche 74 ausgebildet.

An einem dem kürzeren Arm 80 abgewandten Ende 82 des längeren Arms 78 ist ein zweites Führungsmittel 84 ausgebildet. Das zweite Führungsmittel 84 ist komplementär zu dem ersten Führungsmittel 56 ausgebildet und wirkt mit dem ersten Führungsmittel 56 beim Einschieben des Filterelementträgers 18 in das Gehäuse 12 zusammen. Insbesondere liegt das zweite Führungsmittel 84 beim Einschieben der Filterelementträgers 18 in das Gehäuse 12 auf dem ersten Führungsmittel 56 auf. Vorzugsweise ist das zweite Führungsmittel 84 durch eine Stirnfläche 86 an dem abgewandten Ende des längeren Arms 78 gebildet.

Durch Variationen der Länge des längeren Arms 78 ist auch an dem zweiten Führungsmittel 84 mindestens ein Keilabschnitt 87, insbesondere ein vorderer Keilabschnitt 88, gebildet, welcher angrenzend zu einer Stirnplatte 90 des Filterelementträgers 18 angeordnet ist, die die Einschuböffnung 26 verschließt, wenn der Filterelementträger 18 in das Gehäuse 12 eingeschoben ist. Ferner ist vorzugsweise ein hinterer Keilabschnitt 92 durch Stege 95 gebildet, welche die beiden Arme 78 und 80 des Rahmes 72 miteinander verbinden und an einer Außenseite eine Abstützfläche bilden, die den hinteren Keilabschnitt 92 zumindest teilweise bildet.

Der vordere Keilabschnitt 88 des Filterelementträgers 18 ist komplementär zu dem vorderen Keilabschnitt 66 des Gehäuses ausgebildet. Insbesondere weisen der vordere Keilabschnitt 88 des Filterelementträgers 18 und der vordere Keilabschnitt 66 des Gehäuses 12 dieselbe Neigung auf. Der vordere Keilabschnitt 88 des Filterelementträgers 18 verläuft geneigt zu der Dichtungsstützfläche 74 des Filterelementträgers 18.

Der hintere Keilabschnitt 92 des Filterelementträgers 18 verläuft geneigt zur Dichtungsstützfläche 74 des Filterelementträgers 18. Vorzugsweise ist der hintere Keilabschnitt 92 des Filterelementträgers 18 komplementär zu dem hinteren Keilabschnitt 68 des Gehäuses 12 ausgebildet, so dass diese zusammenwirken können. Insbesondere ist die Neigung des hinteren Keilabschnitts 92 zu der Dichtungsstützfläche 74 gleich zu der Neigung des hinteren Keilabschnitts 68 des Gehäuses 12 zu der Dichtfläche 44.

Entsprechend zum ersten Führungsmittel 56 weist auch das zweite Führungsmittel 84 einen Führungsabschnitt 93 auf, der weniger stark gegen die Dichtungsstützfläche 74 des Filterelementträgers 18 geneigt verläuft als der mindestens eine Keilabschnitt 87.

Das Filterelement weist einen Filterkörper 94 auf. Der Filterkörper 94 weist eine erste Strömungsfläche 96 und eine zweite Strömungsfläche 98 auf, welche in der Strömungsrichtung 24 zueinander beabstandet angeordnet sind. Des Weiteren weist der Filterkörper 94 vier Seitenflächen 100 auf, welche die erste Strömungsfläche 96 mit der zweiten Strömungsfläche 98 verbinden. Die Dichtung 76 des Filterelements 20 ist um den Filterkörper 94 umlaufend ausgebildet. Insbesondere läuft die Dichtung 76 an den Seitenflächen 100 des Filterkörpers 94 um. Die Dichtung 76 weist ein Dichtmaterial 102 auf, das die Seitenflächen 100 abdeckt. Das Dichtmaterial 102 ist zwischen der ersten Strömungsfläche 96 und der zweiten Strömungsfläche 98 zu einer Dichtschlaufe 104 geformt, welche radial nach außen absteht. Die Dichtschlaufe 104 ist somit flexibel ausgebildet und bestens geeignet für eine Abdichtung.

Die Dichtschlaufe 104 der Dichtung 76 ist asymmetrisch zwischen der ersten Strömungsfläche 96 und der zweiten Strömungsfläche 98 des Filterkörpers 94 angeordnet. Auf diese Weise kann ein falsches Einsetzen des Filterelements 20 verhindert werden. Bei einem falschen Einsetzen, also einem Überkopfeinsetzen des Filterelements 20 in den Filterelementträger 18 würde der Filterkörper 94 zu weit bzw. in die falsche Richtung über den Filterelementträger 18 überstehen, so dass der Filterelementträger 18 nicht mehr in das Gehäuse 12 eingeschoben werden könnte.

Wenn der Filterelementträger 18 mit eingesetztem Filterelement 20 in das Gehäuse 12 eingeschoben ist, dann liegt die Dichtung 76, im Speziellen die Dichtschlaufe 104 an der Dichtfläche 44 des Gehäuses 12 an und wird an einer gegenüberliegenden Seite der Dichtschlaufe 104 durch die Dichtungsstützfläche 74 gestützt und gegen die Dichtfläche 44 gedrückt.

Bei einem Einschieben des Filterelementträgers 18 in das Gehäuse 12 wirken das erste Führungsmittel 56 des Gehäuses und das zweite Führungsmittel 84 des Filterelementträgers 18 zusammen. In einem ersten Abschnitt 106 des Einschubwegs 70 liegt der Führungsabschnitt 62 des ersten Führungsmittels 56 auf dem Führungsabschnitt 93 des zweiten Führungsmittels 84 aufeinander auf, so dass durch das erste Führungsmittel 56 und das zweite Führungsmittel 84 der Filterelementträger 18 seitlich in das Gehäuse 12 geführt wird. Ein Abstand 108 der Dichtungsstützfläche 74 zu der Dichtfläche 44 bleibt dabei im Wesentlichen konstant. Alternativ kann auch vorgesehen sein, dass der Abstand 108 sich leicht verändert. Allerdings bleibt der Abstand 108 im ersten Abschnitt 106 des Einschubweges 70 groß genug, dass die Dichtung 76 nicht mit der Dichtfläche 44 in Kontakt kommt.

Dadurch kann ein reibungsarmes Einschieben des Filterelementträgers 18 in das Gehäuse 12 ermöglicht werden. Durch den fehlenden Kontakt der Dichtung 76 zu der Dichtfläche 44 wird zusätzlich die Dichtung 76 geschont, so dass Beschädigungen vermieden werden können.

Ab einem zweiten Abschnitt 110 des Einschubweges 70 tragen die Keilabschnitte 64 des ersten Führungsmittels 56 und die Keilabschnitte 87 des zweiten Führungsmittels 84 zur Führung des Filterelementträgers 18 in dem Gehäuse 12 bei. Durch die Schrägstellung der Keilabschnitte 64 und 87 wird der Filterelementträger 18 beim weiteren Einschieben des Filterelementträgers 18 in das Gehäuse 12 in Richtung der Dichtfläche 44 verlagert. Das heißt, der Abstand 108 zwischen der Dichtungsstützfläche 74 und der Dichtfläche 44 verringert sich. Auf diese Weise kann die Dichtung 76 gegen die Dichtfläche 44 gepresst werden, so dass eine Abdichtung des Filterelements 20 gegen das Gehäuse 12 erfolgen kann. Die dabei auftretenden Reibungskräfte erfolgen erst am Ende des Einschubweges 70, so dass insgesamt das Einschieben des Filterelementträgers 18 in das Gehäuse 12 einfach ist und zusätzlich Beschädigungen an der Dichtung 76 vermieden werden können.

Durch das Verlagern des Filterelementträgers 18 in Richtung der Dichtfläche 44 heben der Führungsabschnitt 62 des ersten Führungsmittels 56 und der Führungsabschnitt 93 des zweiten Führungsmittels 84 voneinander ab. Folglich vergrößert sich ein Abstand der beiden Führungsabschnitte 62, 93 beim Einschieben des Filterelementträgers 18 in das Gehäuse 12, wenn der Filterelementträger sich im zweiten Abschnitt 110 des Einschubweges 70 befindet.

## Patentansprüche

1. Filtereinrichtung für ein Kraftfahrzeug, insbesondere zur Filterung von Luft,
- mit einem Filterelement (20), das eine an dem Filterelement (20) ausgebildete Dichtung (76) aufweist,
- mit einem Filterelementträger (18), in welchen das Filterelement (20) eingesetzt werden kann und der eine Dichtungsstützfläche (74) aufweist, auf welcher die Dichtung (76) des Filterelements (20) aufliegt, wenn das Filterelement (20) in dem Filterelementträger (18) eingesetzt ist,
- mit einem Gehäuse (12), in welches der Filterelementträger (18) seitlich eingeschoben werden kann und welches eine Dichtfläche (44) aufweist, an welcher die Dichtung(76) anliegt, wenn der Filterelementträger (18) mit darin eingesetztem Filterelement (20) in das Gehäuse (12) eingeschoben ist,
- wobei das Gehäuse (12) ein erstes Führungsmittel (56) zur Führung des Filterelementträgers (18) aufweist und wobei der Filterelementträger (18) ein zum ersten Führungsmittel (56) komplementäres und mit diesem zusammenwirkendes zweites Führungsmittel (84) aufweist,
**dadurch gekennzeichnet,**
- **dass** das erste Führungsmittel (56) und das zweite Führungsmittel (84) jeweils einen geradlinigen Führungsabschnitt (62, 93) aufweisen,
- **dass** das erste Führungsmittel (56) und/oder das zweite Führungsmittel (84) mindestens einen Keilabschnitt (64, 66, 68, 87, 88, 92) aufweist,
- **dass** ein Einschubweg (70) des Filterelementträgers (18) in das Gehäuse (12) mindestens einen ersten Abschnitt (106) und einen zweiten Abschnitt (110) aufweist,
- **dass**, wenn der Filterelementträger (18) sich im ersten Abschnitt (106) des Einschubweges (70) befindet, der Führungsabschnitt (62) des ersten Führungsmittels (56) und der Führungsabschnitt (93) des zweiten Führungsmittels (84) in Eingriff zueinander stehen, und
- **dass** der Keilabschnitt (64, 66, 68, 87, 88, 92) erst an der Führung des Filterelementträgers (18) beteiligt ist, wenn der Filterelementträger (18) sich im zweiten Abschnitt (110) des Einschubweges (70) befindet.

2. Filtereinrichtung nach Anspruch 1,
**dadurch gekennzeichnet,**
**dass** der Keilabschnitt (64, 66, 68, 87, 88, 92) bei einem Einschieben des Filterelementträgers (18) in das Gehäuse (12) eine Kompression der Dichtung (76) des Filterelements (20) gegen die Dichtfläche (44) des Gehäuses (12) bewirkt.

3. Filtereinrichtung nach Anspruch 1 oder 2,
**dadurch gekennzeichnet,**
**dass** sich ein Abstand (108) zwischen der Dichtungsstützfläche (74) des Filterelementträgers (18) und der Dichtfläche (44) des Gehäuses (12) beim Einschieben des Filterelementträgers (18) in das Gehäuse (12) verkleinert, wenn der Filterelementträger (18) sich in dem zweiten Abschnitt (110) des Einschubweges (70) befindet.

4. Filterelement nach einem der Ansprüche 1 bis 3,
**dadurch gekennzeichnet,**
- **dass** die Führungsabschnitte (62, 93) des ersten Führungsmittels (56) und des zweiten Führungsmittels (84) aneinander anliegen, wenn der Filterelementträger (18) sich in dem ersten Abschnitt (106) des Einschubweges (70) befindet, und
- **dass** die Führungsabschnitte (62, 93) des ersten Führungsmittels (56) und des zweiten Führungsmittels (84) zueinander beabstandet sind, wenn der Filterelementträger (18) sich in dem zweiten Abschnitt (110) des Einschubweges (70) befindet.

5. Filtereinrichtung nach einem der Ansprüche 1 bis 4,
**dadurch gekennzeichnet,**
- **dass** der mindestens eine Keilabschnitt (64, 66, 68) des ersten Führungsmittels (56) geneigt zu der Dichtfläche (44) des Gehäuses (12) verläuft und/oder
- **dass** der mindestens eine Keilabschnitt (87, 88, 92) des zweiten Führungsmittels (84) geneigt zu der Dichtungsstützfläche (74) des Filterelementträgers (18) verläuft.

6. Filtereinrichtung nach einem der Ansprüche 1 bis 5,
**dadurch gekennzeichnet,**
**dass** das erste Führungsmittel (56) zwei Keilabschnitte (64, 66, 68) aufweist und/oder dass das zweite Führungsmittel (84) zwei Keilabschnitte (87, 88, 92) aufweist, wobei der jeweilige Führungsabschnitt (62, 93) zwischen den jeweiligen Keilabschnitten (64, 66, 68, 87, 88, 92) liegt.

7. Filtereinrichtung nach einem der Ansprüche 1 bis 6,
**dadurch gekennzeichnet,**
**dass** der mindestens eine Keilabschnitt (64, 66, 68) an dem Gehäuse (12) und der mindesten eine Keilabschnitt (87, 88, 92) an dem Filterelementträger (18) komplementär zueinander ausgebildet sind, insbesondere eine gleiche Neigung gegen die Dichtfläche (44) bzw. Dichtungsstützfläche (74) aufweisen.

8. Filtereinrichtung nach einem der Ansprüchen 1 bis 7,
**dadurch gekennzeichnet,**
**dass** die Führungsabschnitte (62, 93) weniger stark geneigt zu der Dichtfläche (44) bzw. der Dichtungsstützfläche (74) verlaufen als der mindesten eine Keilabschnitt (64, 66, 68, 87, 88, 92).

9. Filtereinrichtung nach einem der Ansprüche 1 bis 8,
**dadurch gekennzeichnet,**
**dass** das erste Führungsmittel (56) und das zweite Führungsmittel (84) derart ausgebildet sind, dass der zweite Abschnitt (110) des Einschubweges (70) erst nach 70%, vorzugsweise nach 80% und besonders bevorzugt nach 90% eines gesamten Einschubwegs (70) des Filterelementträgers (18) beginnt.

10. Filtereinrichtung nach einem der Ansprüche 1 bis 9,
**dadurch gekennzeichnet,**
**dass** das Filterelement (10), eine erste Strömungsfläche (96) und eine zweite Strömungsfläche (98), die in einer axialen Richtung zueinander versetzt angeordnet sind und jeweils eine im Wesentlichen rechteckigen Grundfläche aufweisen, und mehrere Seitenflächen (100) aufweist, welche die erste Strömungsfläche (96) und die zweite Strömungsfläche (98) verbinden, wobei die Dichtung (76) an den Seitenflächen (100) umläuft.

11. Filtereinrichtung nach Anspruch 10,
**dadurch gekennzeichnet,**
**dass** die Dichtung (76) durch ein Dichtmaterial (102) gebildet ist, das die Seitenflächen (100) abdeckt und zwischen der ersten Strömungsfläche (96) und der zweiten Strömungsfläche (98) zu einer Dichtschlaufe (104) geformt ist.

12. Filtereinrichtung nach Anspruch 11,
**dadurch gekennzeichnet,**
**dass** die Dichtschlaufe (104) zwischen der Dichtungsstützfläche (74) des Filterelementträgers (18) und der Dichtfläche (44) des Gehäuses (12) eingeklemmt ist, wenn der Filterelementträger (18) in das Gehäuse (12) eingeschoben ist.

13. Filtereinrichtung nach Anspruch 11 oder 12,
**dadurch gekennzeichnet,**
**dass** die Dichtschlaufe (104) außermittig an den Seitenflächen (100) umläuft.
